# EUROPEAN PATENT APPLICATION

(11) **EP 0 974 759 A1**
(43) Date of publication of application: **26.01.2000**
(21) Application number: 99113036.0
(22) Date of filing: 06.07.1999
(51) Int. Cl.: F16B 15/06

(54) **Anchoring device with biting helical toothing for application in an hole**

(30) Priority: 17.07.1998 IT MI980498 U
(71) Applicant: Giovannetti, Antonio, 20090 Segrate (Milano) (IT)
(72) Inventor: Giovannetti, Antonio, 20090 Segrate (Milano) (IT)
(74) Representative: Zavattoni, Maria Chiara

(57) **Abstract**

The device, particularly for the furniture sector, comprises a shank (20) provided with one or more helically shaped teeth, having a sharp profile in sectional view defined by walls with different inclinations, the outer diameter of the profile increasing from the distal end toward the proximal end of the shank. The shank, when inserted in a preformed hole, having a diameter smaller than or equal to that of the coil of smallest diameter of the shank, has good resistance to accidental extraction, whereas it can easily be extracted with an unscrewing movement.

## Description

In the furniture field there is a constant search for devices for anchoring panels that are easy to apply even for inexpert staff and yet stay firmly anchored to the panel without any danger of accidental extraction.

A previous application, No. MI194U 00647, discloses a bush with biting toothing for anchoring in a hole, which comprises a series of circular teeth following each other in the direction of the bush axis, the teeth having a sharp profile and increasing in diameter from the distal end of the bush, that is, the end to be inserted deepest in the hole, toward the proximal end, that is, the end nearest the outer surface of the panel. The devices according to the previous application, when used in combination with a hole having a diameter smaller than or equal to that of the smallest tooth, or in any case having a smaller diameter than that of the largest tooth of the bush, solve the problem of allowing easy application to the panel and achieve good resistance to accidental extraction. However, they also offer the same resistance to intentional extraction of the device and in practice cannot be removed unless it is accepted that the hole will be damaged, often irreparably.

An aim of the present application is to create an anchoring device provided with a toothed shank which, besides offering the advantages of easy application and resistance to accidental extraction, also has the advantage of being able to be extracted with relative ease when removal is intentional.

The aim has been achieved with a device as stated in claim 1. Further characteristics and advantages of the device will be made clearer by the subsequent claims.

The new device comprises a shank having a helical toothing, with one or more spiral teeth extending around the axis of the shank itself, the tooth or teeth having a sharp profile when seen in axial sectional view, said profile defined by two walls with a different inclination with respect to the axis, the helical toothing having a slightly increasing diameter from the distal end of the shank (that is, the end intended to be housed deepest in the hole), to the proximal end, that is, the end intended to be nearest the opening of the hole.

The new device, when used in combination with a hole provided in a panel (of wood or plastic, for example), said hole having a diameter roughly equal to or smaller than the minimum diameter of the helical tooth, and in any case no larger than the largest diameter thereof, can easily be applied to the hole by pressure or impact, provides optimal resistance to accidental extraction in that the helical toothing bites the walls of the hole, and furthermore allows relatively easy intentional extraction by means of rotation of said shank around its own axis so as to "unscrew" the shank from the hole.

An exemplary embodiment of the invention will be described below, purely by way of non-limiting illustration, with reference to the appended figures, in which:
Figure 1 is a side view, on an enlarged scale, of a shelf-supporting device with shank according to the invention, shown inserted in a hole of a panel, the latter being drawn in sectional view;
Figure 2 is a bottom view of the device in Figure 1;
Figure 3 shows the shank of the device in Figure 2, on a greatly enlarged scale.

With reference to the figures, a device 10 according to the invention is shown as a shelf-holding device, to hold the shelves of furniture, and has a supporting ledge 12, an upright 14, a body 16 and a shank 20 integral with each other. It is understood that this embodiment of the device is purely exemplary and said device can be made, according to the starts, in various ways and for various other uses, for example as a bush for application in holes or as a fixing means for panels.

The shank 20 defines an axis a and has a peripherally toothed shape with helically arranged toothing. In the embodiment in the figures a toothing with a single helix has been illustrated, but it is understood that the toothing could comprise a helix with two or more starts, around an axis a, preferably with a constant pitch. The helix 22 thus comprises a plurality of coils that define sharp or biting edges. In the figures the edges of intersection of the helix with an axial plane are denoted by 24, 26, 28, 30 and 32, respectively; said edges will henceforth also be called "teeth" for the sake of convenience. Each edge, for example 24, is defined by a surface with minimal extension, 24r, for example extending spirally and almost radially, and by a roughly conical surface 24i, for example with an angle of taper α of about 10° with respect to the axis a. A preferred pitch p between the coils is about 2 mm.

The tooth 24 has a diameter D24, the tooth 26 has a diameter D26; the tooth 28 has a diameter D28; the tooth 30 has a diameter D30; the tooth 32 has a diameter D32.

According to an important characteristic of the invention, D32>D30>D28>D26>D24.

The increase in diameter between one coil tooth and the next will vary according to the diameter of the hole and the density of the panel material; preferred increases are from 0.1 mm to 0.5 mm, preferably 0.2mm.

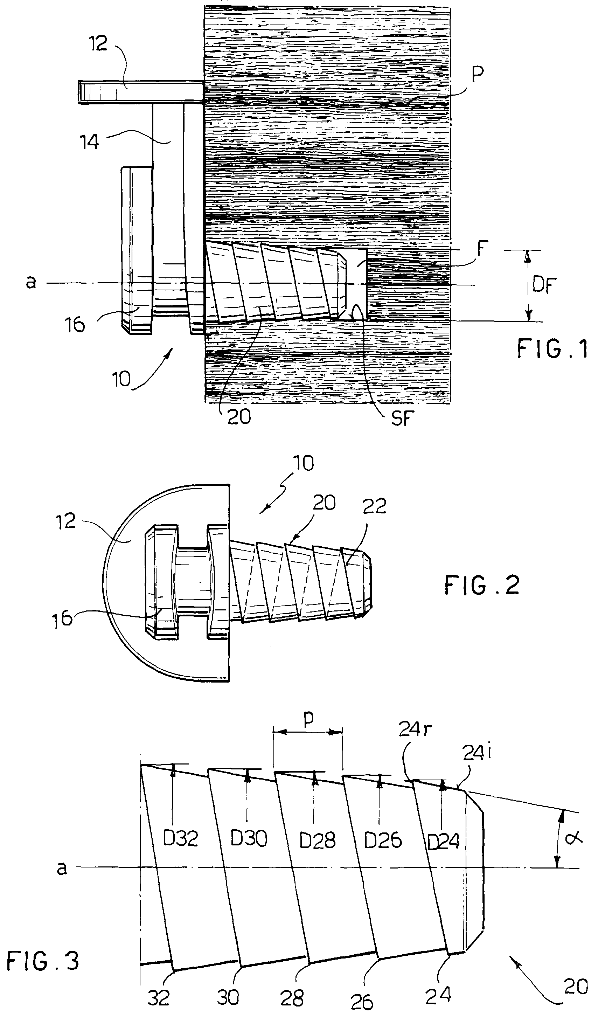

Use of the device will be described with reference to Figure 1. The shank 20 is inserted by applying pressure or knocking into a hole F made in a panel P, the hole having a diameter DF preferably smaller than D24 but in any case smaller than at least D32. Since the helical tooth bites the inner circular surface SF of the hole, accidental extraction of the device 10 is prevented or at least seriously hindered. Should removal of the device 10 be desired, this can easily be done by unscrewing the shank, that is by turning the exposed part of the device anticlockwise for an observer standing in front of the panel (in relation to the embodiment in the figure). This movement allows the helix of the shank to be moved forward along the walls of the hole, toward the left in Figure 1, thus extracting the shank.

## Claims

1. An anchoring device with a shank with biting toothing for anchoring in a hole in a panel or the like, characterized in that said toothing of the shank (20) is helical in shape and has a diameter increasing from a distal end of the shank toward the proximal end thereof

2. A device according to claim 1, characterized in that the toothing is in the form of a helix or spiral with one start.

3. A device according to claim 1, characterized in that the toothing is in the form of a helix or spiral with a plurality of starts.

4. A device according to claim 1, characterized in that the increase in diameter between one coil and the next depends upon the diameter of the hole in the panel and the density of the panel material.

5. A device according to claim 1, characterized in that the increase in diameter between one coil and the next of the toothing of the shank is about 0.2 mm.

6. A device according to claim 1, characterized in that each edge of the helical toothing is defined by inclined surfaces with a different inclination.

7. A device according to claim 6, characterized in that one of said inclined surfaces forms an angle (α) preferably of about 10° with respect to the axis of the shank, in an axial plane.

8. A device according to claim 6, characterized in that one of said inclined surfaces is almost radial with respect to the axis of the shank.
